# EUROPÄISCHE PATENTSCHRIFT

(11) **EP 3 803 747 B1**
(45) Veröffentlichungstag und Bekanntmachung des Hinweises auf die Patenterteilung: **06.08.2025**
(21) Anmeldenummer: 19728628.9
(22) Anmeldetag: 29.05.2019
(51) Int. Cl.: G06Q 20/32, G07B 15/06, G07F 13/00, G06Q 20/14, G06Q 30/04

(54) **VERFAHREN ZUR DURCHFÜHRUNG EINER ZAHLUNG AN BORD EINES FAHRZEUGS UND DAFÜR BESTIMMTE VORRICHTUNG**
METHOD FOR MAKING A PAYMENT ON BOARD A VEHICLE, AND DEVICE INTENDED THEREFOR
PROCÉDÉ DE PAIEMENT À BORD D'UN VÉHICULE ET DISPOSITIF ASSOCIÉ

(30) Priorität: 29.05.2018 CN 201810531176
(43) Veröffentlichungstag der Anmeldung: 14.04.2021
(73) Patentinhaber: VOLKSWAGEN AKTIENGESELLSCHAFT, 38440 Wolfsburg (DE)
(72) Erfinder: WEI, Sun, Beijing, 100015 (CN); BO, Hu, Beijing, 100015 (CN); ZHENG, Zhang, Beijing, 100015 (CN)
(86) Internationale Anmeldenummer: PCT/EP2019/064046
(87) Internationale Veröffentlichungsnummer: WO 2019/229166

(56) Entgegenhaltungen:
- EP-A1- 3 104 124
- CN-A- 105 931 308
- DE-A1- 102010 051 205
- US-A1- 2013 141 578
- US-A1- 2016 193 998

## Beschreibung

### Fachgebiet

Die Erfindung betrifft ein Verfahren zur Durchführung einer Zahlung an Bord eines Fahrzeugs und eine dafür bestimmte Vorrichtung und gehört zum Gebiet der Zahlungstechnik.

### Technischer Hintergrund

Mit der zunehmenden Beliebtheit von Fahrzeugen besitzen zahlreiche Familien eins. Deshalb ist das Fahren sehr häufig geworden.

Beim Fahren trifft man zahlreiche Zahlungsszenarien an. Fahrer müssen z.B. beim Tanken an der Tankstelle, beim Aufladen ihrer Elektrofahrzeuge an Ladestationen, beim Parken in Parkplätzen, an Mautplätzen beim Fahren auf der Autobahn sowie bei der Autowaschanlage.

In diesen Fällen nimmt man Zahlungen entweder in bar, mit Bankkarten oder Mobiltelefonen vor, oder aber die Zahlung erfolgt automatisch durch die elektronischen Bordkennzeichen des im Fahrzeug installierten ETC-Systems.

Bar-, Karten oder Mobiltelefonzahlungen sind für viele Menschen mit Unannehmlichkeiten verbunden, da sie vergessen können, diese mitzubringen. Außerdem kostet die Installation von Ausrüstungen in einem Fahrzeug auch Geld, was zu Mehrkosten führen kann.

In der US 2016 193 998 A1 wird ein Verfahren zur automatischen Aktivierung eines Kamerasystems bereitgestellt, wenn das Steuersystem feststellt, dass sich ein Hindernis im Fahrweg des Fahrzeugs befindet, wodurch dem Fahrer geholfen wird, das Hindernis ganz zu vermeiden.

Die CN 105 931 308 A stellt ein Gebührenkontrollsystem und -verfahren bereit. Wenn ein Fahrzeug in eine Mautstation einfährt, wandelt ein Ladeterminal die erhaltenen Rechnungsinformationen in entsprechende Identifizierungsinformationen um und zeigt die Identifizierungsinformationen an einer voreingestellten Position der Mautstation an, wodurch eine am Fahrzeug angebrachte Kameraeinrichtung des Fahrzeugs die Identifizierungsinformationen erkennen kann, wodurch die erhaltenen Rechnungsinformationen an ein Fahrzeugterminal-Zahlungsterminal zur Zahlung übertragen werden können, wodurch dann direkt ein Zahlungsergebnis an das Ladeterminal zurückgegeben werden kann, und wodurch das Fahrzeug losfahren kann. Daher erreicht der Ladesteuermodus das automatische Aufladen des Fahrzeugs, und ein Fahrzeugfahrer muss das Fahrzeug nicht zum Bezahlen anhalten, wodurch die Ladezeit eingespart wird, ein Verweilen des Fahrzeugs an der Mautstation verhindert und ein reibungsloses Passieren der Fahrzeuge an der Mautstation gewährleistet wird.

Die DE 10 2010 051 205 A1 betrifft ein Verfahren zum Anzeigen von Bildern auf einer Anzeigeeinrichtung, wobei zumindest eine Kamera Bilddaten über eine Umgebung des Kraftfahrzeugs erfasst. Die Anzeigeeinrichtung wird in zumindest zwei Betriebsmodi betrieben, die sich in der Ansicht der Umgebung auf der Anzeigeeinrichtung voneinander unterscheiden. Es erfolgt ein Aktivieren eines Betriebsmodus der Anzeigeeinrichtung aufgrund einer Eingabe einer Bedienperson. Beim Aktivieren des Betriebsmodus durch die Bedienperson wird ein diesen Betriebsmodus angebender Datenwert zugeordnet zu einem aktuellen Wert zumindest eines Messparameters des Kraftfahrzeugs in einer Speichereinrichtung abgelegt. Nach einem erneuten Vorliegen dieses Wertes für den Messparameter wird der zugeordnete Betriebsmodus der Anzeigeeinrichtung automatisch aktiviert.

US 2013/141 578 A1 beschreibt ein Fahrzeugsichtsystem umfassend mindestens eine Kamera, die an einem Fahrzeug angeordnet ist und ein Sichtfeld außerhalb des Fahrzeugs hat, und umfasst eine Steuerung mit einem Bildprozessor zur Verarbeitung von Bilddaten, die von der mindestens einen Kamera erfasst wurden. Die Steuerung, die zumindest teilweise auf die Bildverarbeitung der erfassten Bilddaten durch den Bildprozessor anspricht, ist in der Lage, eine oder mehrere Aktionen auf der Grundlage der Erkennung ausgewählter Elemente in den von der mindestens einen Kamera erfassten Bilddaten auszuführen. Die Steuerung kann den Betrieb einer zusätzlichen Komponente im Fahrzeug neben der Kamera steuern. Das Sichtsystem kann eine nach vorn gerichtete Kamera, eine nach hinten gerichtete Kamera und/oder eine seitlich gerichtete Kamera umfassen.

Gemäß der EP 3 104 124 A1 werden ein Mauterhebungsverfahren und ein Mautsystem bereitgestellt, in denen eine Fahrzeugeinrichtung mit einer optischen Erfassungseinrichtung ausgestattet ist, die ausgebildet ist, wenigstens ein Bild einer straßenseitigen ersten Anordnung von maschinenlesbaren Zeichen aufzunehmen und damit eine erste Eigenpositionsinformation, die von der straßenseitigen ersten Anordnung von maschinenlesbaren Zeiche bereitgestellt wird, optisch zu erfassen, und in denen aus einer oder mehreren erfassten ersten Eigenpositionsinformationen eine Mautgebühr für die Nutzung desjenigen Streckenabschnittes ermittelt wird, dessen Befahrung mit der Erfassung der ersten Eigenpositionsinformation impliziert ist.

### Beschreibung der Erfindung

In Anbetracht der vorgenannten Probleme der bestehenden Technik werden gemäß einer Ausführungsform der Erfindung ein Verfahren und eine Vorrichtung bereitgestellt, die zur Durchführung von Zahlungen an Bord von Fahrzeugen verwendet werden, damit ein Fahrzeugnutzer auf kostengünstigere Weise Zahlungen vornehmen kann.

Die vorliegende Erfindung ist durch die beigefügten unabhängigen Ansprüche definiert, und bevorzugte Aspekte der Erfindung sind durch die beigefügten abhängigen Ansprüche definiert.

Mit dem Schema gemäß der Ausführungsform der Erfindung kann der Fahrzeugnutzer mit der Bord-Kamera-Ausrüstung und dem Bordrechner Zahlungen vornehmen, ohne Bargeld, Bankkarten oder ein Mobiltelefon mitbringen zu müssen, und ohne zusätzliche Geräte installieren zu müssen. Im Vergleich zur bestehenden Technik kann das Schema gemäß der Ausführungsform der Erfindung es dem Fahrzeugnutzer ermöglichen, Zahlungen auf kostengünstigere Weise vorzunehmen.

### Kurze Beschreibung der Zeichnungen

In der nachfolgenden näheren Beschreibung in Kombination mit beiliegenden Zeichnungen werden Merkmale, Eigenschaften und Vorteile der Erfindung verdeutlicht. Es zeigen:
Abb. 1 das Diagramm eines Systems zur Durchführung einer Zahlung an Bord eines Fahrzeugs gemäß einer Ausführungsform der Erfindung;
Abb. 2 das Flussdiagramm eines Verfahrens zur Durchführung einer Zahlung an Bord eines Fahrzeugs gemäß der ersten Ausführungsform der Erfindung;
Abb. 3 das Flussdiagramm eines Verfahrens zur Durchführung einer Zahlung an Bord eines Fahrzeugs gemäß der zweiten Ausführungsform der Erfindung;
Abb. 4 das Flussdiagramm eines Verfahrens zur Durchführung einer Zahlung an Bord eines Fahrzeugs gemäß einer Ausführungsform der Erfindung;
Abb. 5 das schematische Diagramm einer Vorrichtung zur Durchführung einer Zahlung an Bord eines Fahrzeugs gemäß einer Ausführungsform der Erfindung;
Abb. 6 das schematische Diagramm einer Steuerung gemäß einer Ausführungsform der Erfindung und
Abb. 7 das schematische Diagramm eines Fahrzeugs gemäß einer Ausführungsform der Erfindung.

### Konkrete Ausführungen

Der vorliegend beschriebene Gegenstand wird nun unter Bezugnahme auf Ausführungsbeispiele erläutert. Es versteht sich, dass die Ausführungen dem Fachmann lediglich ein besseres Verständnis des vorliegenden Gegenstands vermitteln und somit dessen Verwirklichung ermöglichen und keineswegs als Einschränkung von Schutzumfang, Anwendungsbereich oder den in den Patentansprüchen aufgeführten Beispielen aufzufassen ist. Funktionen und Anordnungen der beschriebenen Elemente können geändert werden, ohne über den Schutzumfang des Offenbarungsgehalts hinauszugehen. Die Beispiele können ggf. fortgelassen, ersetzt oder um verschiedene Prozesse oder Komponenten ergänzt werden. Bspw. kann das beschriebene Verfahren in einer Reihenfolge ausgeführt werden, die sich von der beschriebenen Reihenfolge unterscheidet, und es können Schritte hinzugefügt, fortgelassen oder kombiniert werden. Außerdem können die in einigen Beispielen beschriebenen Merkmale in anderen Beispielen kombiniert werden.

Im vorliegenden Sinne sind der Begriff "umfassen" und dessen Varianten im inklusiven Sinne zu verstehen. Der Begriff "basieren auf" heißt "basieren mindestens teilweise auf". Unter "eine Ausführungsform" ist "mindestens eine Ausführungsform" zu verstehen. Der Begriff "eine weitere Ausführungsform" heißt "mindestens eine weitere Ausführungsform". Die Begriffe "erstes" und "zweites" können sich auf gleiche oder unterschiedliche Gegenstände beziehen. Nachstehend können sie auch - ausdrücklich oder stillschweigend - anders definiert werden. Sofern nicht aus dem Zusammenhang ausdrücklich etwas anderes hervorgeht, bleibt die Definition eines Begriffs vorliegend in allen Fällen gleich.

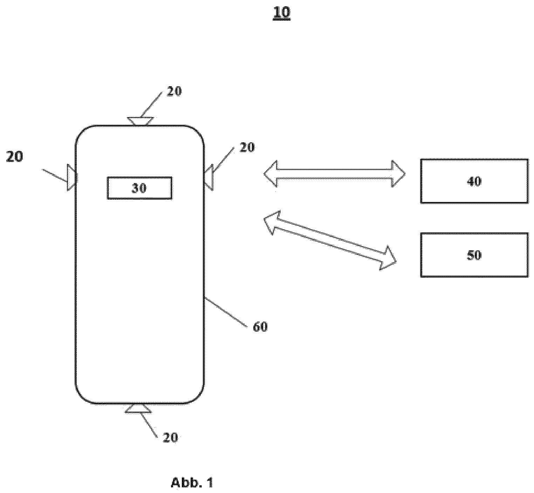

Abb. 1 zeigt das Diagramm der Architektur eines Systems zur Durchführung einer Zahlung an Bord eines Fahrzeugs gemäß einer Ausführungsform der Erfindung. Wie in Abb. 1 gezeigt, kann das System 10 zur Durchführung einer Zahlung an Bord eines Fahrzeug eine Mehrzahl Bord-Kamera-Ausrüstungen 20, einen Bordrechner 30, einen Abrechnungsserver 40 und einen Hilfszahlungsserver 50 umfassen. Die Mehrzahl Bord-Kamera-Ausrüstungen 20 und der Bordrechner 30 sind an einem Fahrzeug 60 angeordnet. Der Bordrechner 30 kann mit der Mehrzahl Bord-Kamera-Ausrüstungen 20 über eine drahtlose oder verkabelte Verbindung verbundensein, und kann jeweils drahtlos mit dem Abrechnungsserver 40 und dem Hilfszahlungsserver 50 kommunizieren.

Die Mehrzahl Kamera-Ausrüstungen 20 kann eine Frontfahrkamera, eine linke Seitenblickkamera, eine rechte Seitenblickkamera und eine Rückfahrkamera des Fahrzeugs 60 umfassen.

Der Bordrechner 30 speichert Daten I, die zur Angabe der Situation verwendet werden, in der die Mehrzahl Kamera-Ausrüstungen 20 die Zahlungsdaten auf einfache Weise aufnimmt. Bei den Zahlungsdaten kann es sich vorliegend insbesondere um Daten einer Mautschranke einer Autobahnein- oder -ausfahrt, Daten der Benzintankpistole einer Tankstelle und Daten einer Ladesäule einer Ladestation handeln. Bei der Situation kann es sich insbesondere um eine Tankstelle, eine Ladestation und eine Autobahn-Mautstelle handeln. Man nehme bspw. an, dass die linke Seitenblickkamera der Mehrzahl Kamera-Ausrüstungen 20 leichter an einer Mautstelle die Zahlungsdaten aufnimmt, die rechte Seitenblickkamera der Mehrzahl Kamera-Ausrüstungen 20 an einer Tankstelle leichter die Zahlungsdaten aufnimmt und die Rückfahrkamera der Mehrzahl Kamera-Ausrstungen 20 die Zahlungsdaten an einer Ladestation leichter aufnimmt. Daraus lässt sich also schließen, dass die linke Seitenblickkamera 20 die Zahlungsdaten an einer Autobahnmautstelle leichter aufnimmt, die rechte Seitenblickkamera 20 an einer Tankstelle und die Rückfahrkamera 20 an einer Ladestation leichter aufnimmt. Die Daten I können schon vor Auslieferung des Fahrzeugs 60 festgesetzt werden und unverändert bleiben, oder sie können ggf. vom Besitzer des Fahrzeugs 60 oder einer entsprechenden Person geändert werden.

Außerdem speichert der Bordrechner 30 auch Daten IP-1 des Fahrzeugnutzers 60 als Zahler, die das Kennzeichen des Fahrzeugs 60 und das Kennzeichen des Zahlungskontos des Fahrzeugnutzers 60 umfassen.

Der Abrechnungsserver 40 wird zur Berechnung des zu entrichtenden Betrags verwendet. Der Hilfszahlungsserver 50 wird zur Unterstützung des Zahlungsvorgangs herangezogen.

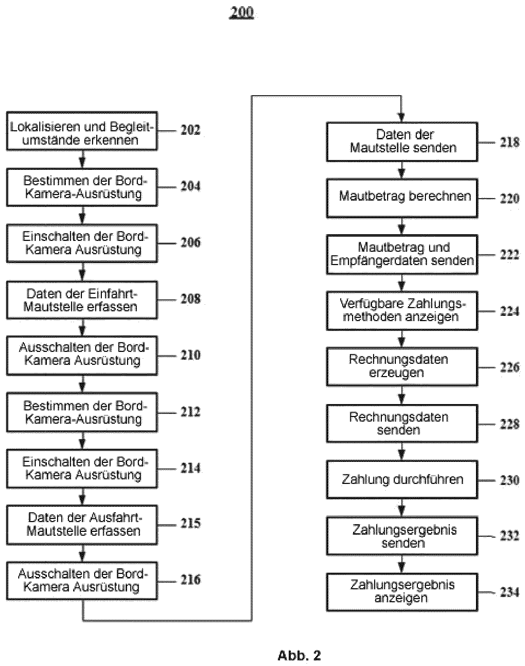

Abb. 2 zeigt das Flussdiagramm eines Verfahrens zur Durchführung einer Zahlung an Bord eines Fahrzeugs gemäß der ersten Ausführungsform der Erfindung. Die erste Ausführungsform bezieht sich auf die Entrichtung der Autobahnmaut. Ein Verfahren 200 wird in der Abb. 2 nachstehend in Verbindung mit dem System 10 der Abb. 1 näher beschrieben.

Wie in Abb. 2, Block 202, gezeigt, wenn der Nutzer das Fahrzeug 60 fährt, ermittelt der Bordrechner 30 des Fahrzeugs 60 kontinuierlich den aktuellen Standort des Fahrzeugs 60, z.B. (insbesondere) mittels GPS oder des Navigationssystems des Fahrzeugs 60, und ermittelt die Begleitumstände der aktuellen Lage des Fahrzeugs 60 anhand von Kartendaten oder sonstigen Mitteln.

Wenn der Nutzer das Fahrzeug 60 auf einer Autobahn fährt und an eine Einfahrt-Mautstelle G1 der Autobahn gelangt, stellt der Bordrechner 30 des Fahrzeugs 60 fest, dass die aktuelle Lage des Fahrzeugs 60 die Mautstelle G1 ist.

Im Block 204 bestimmt der Bordrechner 30 des Fahrzeugs 60 anhand der gespeicherten Daten I, die zur Angabe der Situationen verwendet werden, in denen die Mehrzahl Kamera-Ausrüstungen 20 des Fahrzeugs 60 die Zahlungsdaten leicht aufnehmen, die Kamera-Ausrüstung 20 des Fahrzeugs 60, die die Zahlungsdaten an der Mautstelle leicht aufnimmt. Auf Autobahnen handelt es sich bei den Zahlungsdaten um die Daten an den Mautstellen, und die Mautstellendaten werden üblicherweise an den Schranken als QR-Codes o.ä. fixiert. Deshalb ist die Frontfahrkamera die Kamera-Ausrüstung des Fahrzeugs 60, die die Zahlungsdaten leicht an Mautstellen aufnimmt.

Im Block 206 schaltet der Bordrechner 30 des Fahrzeugs 60 die bestimmte Kamera-Ausrüstung 20 des Fahrzeugs 60 ein, damit die Kamera-Ausrüstung 20 bei Einschaltung beginnt, ein Bild aufzunehmen. Das von der Kamera-Ausrüstung 20 bei Einschaltung aufgenommene Bild umfasst die Daten der Mautstelle G1.

Im Block 208 verarbeitet der Bordrechner 30 des Fahrzeugs 60 das von der Kamera-Ausrüstung 20 bei Einschaltung aufgenommene Bild, um die Daten der Mautstelle G1 zu erfassen.

Im Block 210 schaltet der Bordrechner 30 des Fahrzeugs die Kamera-Ausrüstung 20 aus, nachdem die Daten der Mautstelle G1 erfasst worden sind.

Nach dem Passieren der Mautstelle G1 fährt der Nutzer das Fahrzeug 60 weiter auf der Autobahn, und bei Erreichen einer Ausfahrt-Mautstelle G2 der Autobahn stellt der Bordrechner 30 des Fahrzeugs 60 fest, dass der aktuelle Standort des Fahrzeugs 60 die Mautstelle G2 der Autobahn ist.

Im Block 212 bestimmt der Bordrechner 30 des Fahrzeugs 60 anhand der gespeicherten Daten I, die zur Angabe der Situationen verwendet werden, in denen die Mehrzahl Kamera-Ausrüstungen 20 des Fahrzeugs 60 die Zahlungsdaten leicht aufnehmen, die Kamera-Ausrüstung 20 des Fahrzeugs 60, die die Zahlungsdaten an der Mautstelle leicht aufnimmt.

Im Block 214 schaltet der Bordrechner 30 des Fahrzeugs 60 die bestimmte Kamera-Ausrüstung 20 des Fahrzeugs 60 ein, damit die Kamera-Ausrüstung 20 bei Einschaltung beginnt, ein Bild aufzunehmen. Das von der Kamera-Ausrüstung 20 bei Einschaltung aufgenommene Bild umfasst die Daten der Mautstelle G2.

Im Block 215 verarbeitet der Bordrechner 30 des Fahrzeugs 60 das von der Kamera-Ausrüstung 20 bei Einschaltung aufgenommene Bild, um die Daten der Mautstelle G2 zu erfassen.

Im Block 216 schaltet der Bordrechner 30 des Fahrzeugs die Kamera-Ausrüstung 20 aus, nachdem die Daten der Mautstelle G2 erfasst worden sind.

Im Block 218 sendet der Bordrechner 30 des Fahrzeugs 60 die Daten der Mautstelle G1 und die Daten der Mautstelle G2 an den Abrechnungsserver 40, um bei diesem die Berechnung der Autobahnmaut anzufordern.

Im Block 220 berechnet der Abrechnungsserver 40 nach dem Empfang der Daten der Mautstelle G1 und der Daten der Mautstelle G2 vom Bordrechner 30 des Fahrzeugs 60 den Mautbetrag (d.h. den zu entrichtenden Betrag) für die von der Mautstelle G1 und der Mautstelle G2 abgegrenzte Strecke anhand der gespeicherten Daten, aus denen die Maut für die von zwei beliebigen aufeinanderfolgenden Mautstellen der Autobahn definierte Strecke hervorgeht.

Im Block 222 sendet der Abrechnungsserver 40 den berechneten Mautbetrag und die Empfängerdaten an den Bordrechner 30 des Fahrzeugs 60.

Im Block 224 zeigt der Bordrechner 30 des Fahrzeugs 60 nach dem Empfang des Mautbetrags und der Empfängerdaten vom Abrechnungsserver 40 eine Vielzahl verfügbarer Zahlungsmethoden zur Auswahl durch den Nutzer des Fahrzeugs 60 an. Der Nutzer des Fahrzeugs 60 kann aus der Vielzahl der angezeigten verfügbaren Zahlungsmethoden eine erwartete Zahlungsmethode auswählen. Vorliegend können die verfügbaren Zahlungsmethoden insbesondere WeChat Pay, Alipay, Kreditkarte und Online-Banken umfassen.

Im Block 226, nachdem der Nutzer des Fahrzeugs 60 die erwartete Zahlungsmdethode auswählt, erzeugt der Bordrechner 30 des Fahrzeugs 60 Rechnungsdaten, umfassend die Empfängerdaten, die Zahlerdaten (Daten des Nutzers des Fahrzeugs 60), den empfangenen Mautbetrag und die ausgewählte Zahlungsmethode.

Im Block 228 sendet der Bordrechner 30 des Fahrzeugs 60 die erzeugten Rechnungsdaten an den Hilfszahlungsserver 50, um die Zahlung anzufordern.

Im Block 230 tritt der Hilfszahlungsserver 50 nach dem Empfang der Rechnungsdaten vom Bordrechner 30 des Fahrzeugs 60 mit dem vorgegebenen Zahlungsserver in Interaktion, der der in den empfangenen Rechnungsdaten enthaltenen Zahlungsmethode entspricht, um die in den empfangenen Rechnungsdaten angegebene Zahlung auszuführen und das vom Zahlungsserver zurückgesendete Zahlungsergebnis einzuholen.

Im Block 232 sendet der Hilfszahlungsserver 50 das Zahlungsergebnis an den Bordrechner 30 des Fahrzeugs 60.

Im Block 234 zeigt der Bordrechner 30 des Fahrzeugs 60 das vom Hilfszahlungsserver 50 empfangene Zahlungsergebnis auf dessen Bildschirm an.

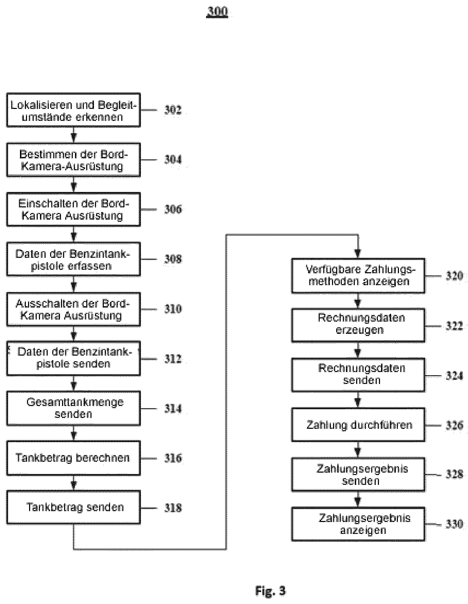

Abb. 3 zeigt das Flussdiagramm eines Verfahrens zur Durchführung einer Zahlung an Bord eines Fahrzeugs gemäß der zweiten Ausführungsform der Erfindung. Die zweite Ausführungsform bezieht sich auf die Bezahlung der an einer Tankstelle anfallenden Kraftstoffkosten. Ein Verfahren 300 wird in der Abb. 3 nachstehend in Verbindung mit dem System 10 der Abb. 1 näher beschrieben.

Wie in Abb. 3, Block 302, gezeigt, wenn der Nutzer das Fahrzeug 60 fährt, ermittelt der Bordrechner 30 des Fahrzeugs 60 kontiuierlich den aktuellen Standort des Fahrzeugs 60, z.B. (insbesondere) mittels GPS oder des Navigationssystems des Fahrzeugs 60, und ermittelt die Begleitumstände der aktuellen Lage des Fahrzeugs 60 anhand von Kartendaten oder sonstigen Mitteln.

Wenn der Nutzer das Fahrzeug 60 auftanken will und zu einer Tankstelle G3 fährt, stellt der Bordrechner 30 des Fahrzeugs 60 fest, dass die aktuelle Lage des Fahrzeugs 60 die Tankstelle G3 ist.

Im Block 304 bestimmt der Bordrechner 30 des Fahrzeugs 60 anhand der gespeicherten Daten I, die zur Angabe der Situationen verwendet werden, in denen die Mehrzahl Kamera-Ausrüstungen 20 des Fahrzeugs 60 die Zahlungsdaten leicht aufnehmen, die Kamera-Ausrüstung 20 des Fahrzeugs 60, die die Zahlungsdaten an der Tankstelle leicht aufnimmt. An der Tankstelle handelt es sich bei den Zahlungsdaten um die Daten der Benzintankpistole der Tankstelle, und die Daten der Benzintankpistole werden üblicherweise auf der Außenfläche der an die Tankpistole angeschlossenen Auftankeinrichtung als QR-Code usw. angebracht.

Im Block 306 schaltet der Bordrechner 30 des Fahrzeugs 60 die bestimmte Kamera-Ausrüstung 20 des Fahrzeugs 60 ein, damit die Kamera-Ausrüstung 20 bei Einschaltung beginnt, ein Bild aufzunehmen. Das von der Kamera-Ausrüstung 20 bei Einschaltung aufgenommene Bild umfasst die Daten der Tankpistole an der Tankstelle G3, die zum Auftanken des Fahrzeugs 60 verwendet wird. Man nehme vorliegend an, dass die Tankpistole q an der Tankstelle G3 zum Auftanken des Fahrzeugs 60 verwendet wird.

Im Block 308 verarbeitet der Bordrechner 30 des Fahrzeugs 60 das von der Kamera-Ausrüstung 20 bei Einschaltung aufgenommene Bild, um die Daten der Tankpistole q zu erfassen.

Im Block 310 schaltet der Bordrechner 30 des Fahrzeugs bei Einschaltung die Kamera-Ausrüstung 20 aus, nachdem die Daten der Tankpistole q erfasst worden sind.

Im Block 312 sendet der Bordrechner 30 des Fahrzeugs 60 die aufgenommenen daten der Tankpistole q an den Abrechnungsserver 40, um den Abrechnungsserver 40 darüber in Kenntnis zu setzen, dass das Fahrzeug 60 mit der Tankpistole q aufgetankt wird.

Im Block 314 sendet die an die Tankpistole q angeschlossene Tankeinrichtung nach Abschluss des Auftankvorgangs die gesamte Tankmenge der Tankpistole q an den Abrechungsserver 40.

Im Block 316 berechnet der Abrechnungsserver 40 nach dem Empfang der gesamten Tankmenge der Tankpistole q von der an die Tankpistole q angeschlossenen Tankeinrichtung die Auftankmenge des Fahrzeugs 60 (d.h. den zu entrichtenden Betrag) anhand des Einheitspreises des Kraftstoffs und der gesamten Tankmenge der Tankpistole q.

Im Block 318 sendet der Abrechnungsserver 40 die Tankmenge des Fahrzeugs 60 und die Empfängerdaten an den Bordrechner 30 des Fahrzeugs 60.

Im Block 320 zeigt der Bordrechner 30 des Fahrzeugs nach dem Empfang der Tankmenge des Fahrzeugs 60 und der Empfängerdaten vom Abrechnungsserver 40 eine Vielzahl verfügbarer Zahlungsmethoden zur Auswahl durch den Nutzer des Fahrzeugs 60 an. Der Nutzer des Fahrzeugs 60 kann aus der Vielzahl der angezeigten verfügbaren Zahlungsmethoden eine erwartete Zahlungsmethode auswählen.

Im Block 322, nachdem der Nutzer des Fahrzeugs 60 die erwartete Zahlungsmdethode auswählt, erzeugt der Bordrechner 30 des Fahrzeugs 60 Rechnungsdaten, umfassend die Empfängerdaten, die Zahlerdaten (Daten des Nutzers des Fahrzeugs 60), die empfangene Tankmenge des Fahrzeugs 60 und die ausgewählte Zahlungsmethode.

Im Block 324 sendet der Bordrechner 30 des Fahrzeugs 60 die erzeugten Rechnungsdaten an den Hilfszahlungsserver 50, um die Zahlung anzufordern.
Im Block 326 tritt der Hilfszahlungsserver 50 nach dem Empfang der Rechnungsdaten vom Bordrechner 30 des Fahrzeugs 60 mit dem vorgegebenen Zahlungsserver in Interaktion, der der in den empfangenen Rechnungsdaten enthaltenen Zahlungsmethode entspricht, um die in den empfangenen Rechnungsdaten angegebene Zahlung auszuführen und das vom Zahlungsserver zurückgesendete Zahlungsergebnis einzuholen.

Im Block 328 sendet der Hilfszahlungsserver 50 das Zahlungsergebnis an den Bordrechner 30 des Fahrzeugs 60.

Im Block 330 zeigt der Bordrechner 30 des Fahrzeugs 60 das vom Hilfszahlungsserver 50 empfangene Zahlungsergebnis auf dessen Bildschirm an.

Aus obiger Beschreibung ist ersichtlich, dass beim Schema gemäß der Ausführungsform der Fahrzeugnutzer die Zahlung mit der Bord-Kamera-Ausrüstung und dem Bordrechner ohne Bargeld, Bankkarten oder Mobiltelefon sowie ohne zusätzliche Geräte vornehmen kann. Somit ermöglicht das Schema gemäß der Ausführungsform dem Fahrzeugnutzer eine leichte Zahlung.

Außerdem handelt es sich bei der Bord-Kamera-Ausrüstung und dem Bordrechner, die zur Zahlung verwendet werden, beim Schema gemäß der Ausführungsform um Ausrüstungen, die bereits in der Ausrüstung vorhanden sind, also bedarf es keiner weiteren Geräte. Somit ermöglicht es das Schema gemäß der Ausführungsform dem Fahrzeugnutzer, die Zahlung auf kostengünstigere Weise vorzunehmen.

Außerdem kann die Bord-Kamera-Ausrüstung des Fahrzeugs, die unter den Begleitumständen der aktuellen Lage des Fahrzeugs die Zahlungsdaten leicht aufnehmen kann, beim Schema gemäß der Ausführungsform eingeschaltet werden, um die Zahlungsdaten aufzunehmen, was dem Fahrzeugnutzer den Zahlungsvorgang noch bequemer macht.

Außerdem werden die verfügbaren Zahlungsmethoden beim Schema gemäß der Ausüfhrungsform zur Auswahl der erwarteten Zahlungsmethode durch den Nutzer angezeigt, was den Zahlungsvorgang dem Fahrzeugnutzer noch angenehmer machen kann.

### Weitere Varianten

Es versteht sich für den Fachmann, dass die vorgenannten Funktionen des Bordrechners 30 des Fahrzeugs 60 auch über weitere Bord-Ausrüstungen des Fahrzeugs 60 übernommen werden können (insbesondere z.B. das Navigationssystem und das Infotainment-System des Fahrzeugs 60).

Es versteht sich für den Fachmann, dass die erfindungsgemäßen Schemen auch andere geeignete Anwendungsmöglichkeiten finden als Autobahnen und Tankstellen, so z.B. Parkplätze und Ladestationen.

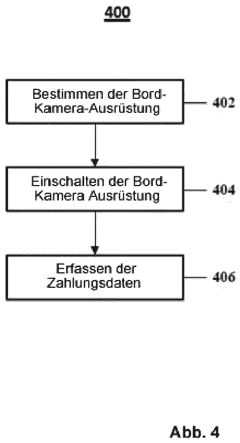

Abb. 4 zeigt das Flussdiagramm eines Verfahrens zur Durchführung einer Zahlung an Bord eines Fahrzeugs gemäß einer Ausführungsform der Erfindung. Das Verfahren 400 der Abb. 4 kann durch den Bordrechner des Fahrzeugs oder eine andere Bord-Ausrüstung ausgeführt werden.

Wie in Abb. 4 gezeigt, kann das Verfahren 400 im Block 402 den Schritt des Bestimmens der an Bord befindlichen Kamera-Ausrüstung, die die Zahlungsdaten unter den Begleitumständen der aktuellen Lage eines Fahrzeugs von einer Mehrzahl an Bord befindlicher Kamera-Ausrüstungen, wenn Zahlungsdaten aufzunehmen sind, umfassen.

Das Verfahren 400 kann auch den Schritt des Einschaltens der bestimmten Bord-Kamera-Ausrüstung des Fahrzeugs im Block 404 umfassen.

Das Verfahren 400 kann im Block 406 auch den Schritt des Erfassens der Zahlungsdaten aus Bildern, die von der eingeschalteten Kamera-Ausrüstung aufgenommen worden sind verwendet wird, um die Zahlung durchzuführen.

Das Verfahren 400 kann auch die nachfolgenden Schritte umfassen: Senden der erfassten Zahlungsdaten an einen Abrechnungsserver, um den zu entrichtenden Betrag zu berechnen, und Senden der Rechnungsdaten an einen Hilfszahlungsserver, um die Zahlung anzufordern, wenn der zu entrichtende Betrag und die Empfängerdaten vom Abrechnungsserver empfangen werden, verwendet wird, wobei die Rechnungsdaten mindestens die Empfängerdaten, die Zahlerdaten und den zu entrichenden Betrag enthalten.

Der Block 402 kann folgende Schritte umfassen: Ermitteln des aktuellen Standorts des Fahrzeugs; Identifizieren der Begleitumstände der aktuellen Lage und Erfassen der an Bord befindlichen Kamera-Ausrüstung, die die Zahlungsdaten einzeln und auf einfache Art und Weise aufnehmen kann, aus der Mehrzahl der an Bord befindlichen Kamera-Ausrüstungen, anhand der zur Angabe der Umstände, unter denen die Mehrzahl an Bord befindlicher Kamera-Aurüstungen die Zahlungsdaten einzeln und auf einfache Art und Weise aufnehmen kann, verwendeten Daten.

Das Verfahren 300 kann auch folgenden Schritt umfassen: Anzeigen der Vielzahl verfügbarer Zahlungsmethoden zur Auswahl durch den Fahrzeugnutzer, bevor die Rechnungsdaten an den Hilfszahlungsserver gesendet werden, wobei die Rechnungsdaten auch die vom Fahrzeugnutzer ausgewählte Zahlungsmethode enthalten.

Die Zahlungsdaten werden an der Schranke einer Autobahnmautstelle oder der Außenfläche der Betankungsausrüstung einer Tankstelle festgesetzt, um bei Einschalten von der an Bord befindlichen Kamera-Ausrüstung erfasst zu werden.

Abb. 5 zeigt das schematische Diagramm einer Vorrichtung zur Durchführung einer Zahlung an Bord eines Fahrzeugs gemäß einer Ausführungsform der Erfindung. Die Vorrichtung 500 der Abb. 5 kann durch Software, Hardware oder eine Kombination davon realisiert werden und kann im Bordrechner des Fahrzeugs oder einer anderen geeigneten Bord-Ausrüstung installiert werden.

Wie in Abb. 5 gezeigt, kann die Vorrichtung 500 das Bestimmungsmodul 502, das Einschaltmodul 504 und das Erfassungsmodul 506 umfassen. Das Bestimmungsmodul 502 wird zum Bestimmen der an Bord befindlichen Kamera-Ausrüstung, die Zahlungsdaten unter den Begleitumständen der aktuellen Lage eines Fahrzeugs von einer Mehrzahl an Bord befindlicher Kamera-Ausrüstungen verwendet, wenn Zahlungsdaten aufzunehmen sind. Das Einschaltmodul 504 wird zum Einschalten der bestimmten Kamera-Ausrüstung des Fahrzeugs verwendet. Das Erfassungsmodul 506 wird zum Erfassen der Zahlungsdaten aus Bildern, die von der eingeschalteten Kamera-Ausrüstung aufgenommen worden sind, verwendet, um die Zahlung durchzuführen.

Die Vorrichtung 500 kann auch auch ein Sendemodul umfassen, das verwendet wird zum Senden der erfassten Zahlungsdaten an den Abrechnungsserver, um den zu entrichtenden Betrag zu berechnen, und zum Senden der Rechnungsdaten an einen Hilfszahlungsserver, um die Zahlung anzufordern, wenn der zu entrichtende Betrag und die Empfängerdaten vom Abrechnungsserver empfangen werden, verwendet wird, wobei die Rechnungsdaten mindestens die Empfängerdaten, die Zahlerdaten und den zu entrichenden Betrag enthalten.

Das Bestimmungsmodul 502 umfasst: ein Lokalisierungsmodul, das zur Lokalisieren des aktuellen Standorts des Fahrzeugs verwendet wird; ein Erkennungsmodul, das zur Identifizierung der Begleitumstände der aktuellen Lage verwendet wird, und ein Erfassungsmodul, das verwendet wird zum Erfassen der an Bord befindlichen Kamera-Ausrüstung, die die Zahlungsdaten einzeln und auf einfache Art und Weise aufnehmen kann, aus der Mehrzahl der an Bord befindlichen Kamera-Ausrüstungen, anhand der zur Angabe der Umstände, unter denen die Mehrzahl an Bord befindlicher Kamera-Aurüstungen die Zahlungsdaten einzeln und auf einfache Art und Weise aufnehmen kann, verwendeten Daten.

Die Vorrichtung 500 umfasst auch ein Anzeigemodul, das zum Anzeigen der Vielzahl verfügbarer Zahlungsmethoden zur Auswahl durch den Fahrzeugnutzer verwendet wird, bevor die Rechnungsdaten an den Hilfszahlungsserver gesendet werden, wobei die Rechnungsdaten auch die vom Fahrzeugnutzer ausgewählte Zahlungsmethode enthalten.

Die Zahlungsdaten werden an der Schranke einer Autobahnmautstelle oder der Außenfläche der Betankungsausrüstung einer Tankstelle festgesetzt, um bei Einschalten von der an Bord befindlichen Kamera-Ausrüstung erfasst zu werden.

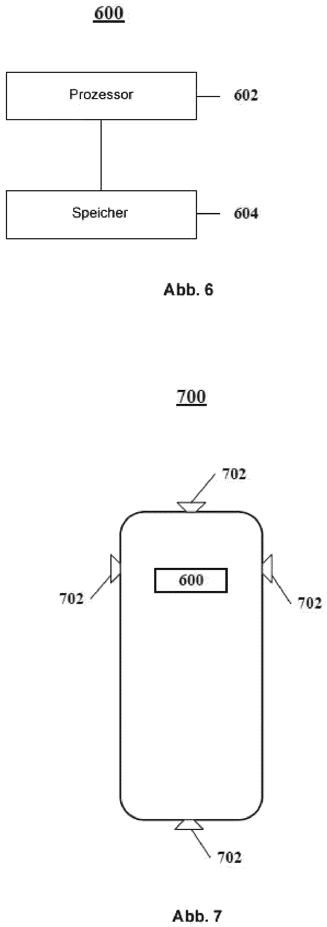

Abb. 6 zeigt das schematische Diagramm der Bord-Ausrüstung eines Fahrzeugs gemäß einer Ausführungsform der Erfindung. Wie in Abb. 6 gezeigt, kann die Bord-Ausrüstung 600 einen Prozessor 602 und einen Speicher 604 umfassen, wobei der Speicher 604 ausführbare Befehle speichert, den die Ausführung des in Abb. 4 gezeigten Verfahrens 400 durch den Prozessor 602 ermöglichen.

Gemäß der Ausführungsform der Erfindung wird auch ein maschinenlesbarer Datenträger bereitgestellt, der ausführbare Befehle speichert, die der Maschine die Ausführung des Verfahrens 400 der Abb. 4 ermöglichen.

Abb. 7 zeigt das schematische Diagramm eines Fahrzeugs gemäß einer Ausführungsform der Erfindung. Wie in Abb. 7 gezeigt, umfasst das Fahrzeug 700 eine Mehrzahl Bord-Kamera-Ausrüstungen 702 und Bord-Ausrüstungen 600. Die Mehrzahl Kamera-Ausrüstungen 702 kann insbesondere eine Frontfahrkamera, eine linke Seitenblickkamera, eine rechte Seitenblickkamera und eine Rückfahrkamera des Fahrzeugs 700 umfassen.

Die vorstehend in Kombination mit beiligenden Zeichnungen beschriebenen Ausführungen beschreiben die Ausführungsbeispiel und nicht etwa alle Ausführungsformen, die realisierbar sind oder in den Schutzumfang der Ansprüche fallen. Unter "(-)Beispiel(-haft)" ist im vorliegenden Sinne "verwendet als Beispiele, Exemplare oder Veranschaulichung" statt "bevorzugt" oder "vorteilhafter" als andere Ausführungsformen zu verstehen. Die Ausführungen enthalten konkrete Einzelheilten zur besseren Erläuterung der beschriebenen Technologien. Die Technologien können aber auch ohne die konkreten Einzelheiten ausgeführt werden. In einigen Fällen werden allgemein bekannte Strukturen und Vorrichtungen in Blockdiagrammen gezeigt, um eine Erschwerung des Verständnisses der beschriebenen Ausführungsformen zu vermeiden.

Obige Beschreibung der Erfindung wird bereitgestellt, damit der Fachmann den Offenbarungsgehalt realisieren bzw. verwenden kann. Für den Fachmann liegt es auf der Hand, dass die Erfindung verschiedenen Modifikationen zugänglich ist, und das vorliegend definierte allgemeinen Prinzip sich auch in anderen Varianten anwenden lässt, ohne über den Schutzumfang der Erfindung hinauszugehen. Deshalb ist die Erfindung nicht auf die vorliegend beschriebenen Beispiele beschränkt, sondern entspricht dem weitesten Umfang des Prinzips und der neuen Merkmale der Erfindung.

## Patentansprüche

1. Verfahren zur Durchführung einer Zahlung an Bord eines Fahrzeugs mittels eines Bordrechners, umfassend die Schritte:
Kontinuierliches Ermitteln des aktuellen Standorts des Fahrzeugs und Ermitteln einer Situation der aktuellen Lage und Ermitteln der Situation, in der sich das Kraftfahrzeug befindet, anhand des aktuellen Standorts und anhand von Kartendaten;
Bestimmen der an Bord befindlichen Kamera-Ausrüstung, die Zahlungsdaten unter der Situation der aktuellen Lage eines Fahrzeugs von einer Mehrzahl an Bord befindlicher Kamera-Ausrüstungen aufnehmen kann, wenn Zahlungsdaten aufzunehmen sind, anhand von gespeicherten Daten, die zur Angabe der Situationen verwendet werden, in denen die Mehrzahl an Bord befindlicher Kamera-Ausrüstungen die Zahlungsdaten aufnehmen können, und wobei die Daten festgesetzt und unveränderlich sind;
Einschalten der bestimmten Kamera-Ausrüstung des Fahrzeugs;
Erfassen der Zahlungsdaten aus Bildern, die von der eingeschalteten Kamera-Ausrüstung aufgenommen worden sind, um die Zahlung durchzuführen;
Senden der erfassten Zahlungsdaten an einen Abrechnungsserver, um den zu entrichtenden Betrag zu berechnen;
Senden der Rechnungsdaten an einen Hilfszahlungsserver, um die Zahlung anzufordern, wenn der zu entrichtende Betrag und die Empfängerdaten vom Abrechnungsserver empfangen werden, wobei die Rechnungsdaten mindestens die Empfängerdaten, die Zahlerdaten und den zu entrichtenden Betrag enthalten;
Anzeigen einer Vielzahl verfügbarer Zahlungsmethoden zur Auswahl durch den Fahrzeugnutzer, bevor die Rechnungsdaten an den Hilfszahlungsserver gesendet werden,
wobei die Rechnungsdaten auch die vom Fahrzeugnutzer ausgewählte Zahlungsmethode enthalten.

2. Verfahren nach Anspruch 1, wobei der Schritt des Bestimmens der an Bord befindlichen Kamera-Ausrüstung, die die Zahlungsdaten unter der Situation der aktuellen Lage des Fahrzeugs von einer Mehrzahl an Bord befindlicher Kamera-Ausrüstungen folgende Schritte umfasst:
Ermitteln des aktuellen Standorts des Fahrzeugs;
Identifizieren der Situation der aktuellen Lage und
Erfassen der an Bord befindlichen Kamera-Ausrüstung, die die Zahlungsdaten einzeln und auf einfache Art und Weise aufnehmen kann, aus der Mehrzahl der an Bord befindlichen Kamera-Ausrüstungen, anhand der zur Angabe der Umstände, unter denen die Mehrzahl an Bord befindlicher Kamera-Aurüstungen die Zahlungsdaten einzeln und auf einfache Art und Weise aufnehmen kann, verwendeten Daten.

3. Verfahren nach Anspruch 1, wobei:
die Zahlungsdaten an der Schranke einer Autobahnmautstelle oder der Außenfläche der Betankungsausrüstung einer Tankstelle festgesetzt werden, um bei Einschalten von der an Bord befindlichen Kamera-Ausrüstung erfasst zu werden.

4. Vorrichtung zur Durchführung einer Zahlung an Bord eines Fahrzeugs gemäß einem der Ansprüche 1 bis 3, umfassend:
ein Bestimmungsmodul, das zum Bestimmen der an Bord befindlichen Kamera-Ausrüstung, die die Zahlungsdaten unter der Situation der aktuellen Lage eines Fahrzeugs von einer Mehrzahl an Bord befindlicher Kamera-Ausrüstungen verwendet wird, wenn Zahlungsdaten aufzunehmen sind;
ein Einschaltmodul, das zum Einschalten der bestimmten Kamera-Ausrüstung des Fahrzeugs verwendet wird, und
ein Erfassungsmodul, das zum Erfassen der Zahlungsdaten aus Bildern, die von der eingeschalteten Kamera-Ausrüstung aufgenommen worden sind verwendet wird, um die Zahlung durchzuführen.

5. Vorrichtung nach Anspruch 4, ferner umfassend:
ein Sendemodul, das zum Senden der erfassten Zahlungsdaten an einen Abrechnungsserver, um den zu entrichtenden Betrag zu berechnen, und zum Senden der Rechnungsdaten an einen Hilfszahlungsserver, um die Zahlung anzufordern, wenn der zu entrichtende Betrag und die Empfängerdaten vom Abrechnungsserver empfangen werden, verwendet wird, wobei die Rechnungsdaten mindestens die Empfängerdaten, die Zahlerdaten und den zu entrichenden Betrag enthalten.

6. Vorrichtung nach Anspruch 4, wobei das Bestimmungsmodul umfasst:
ein Lokalisierungsmodul, das zur Lokalisieren des aktuellen Standorts des Fahrzeugs verwendet wird;
ein Erkennungsmodul, das zur Identifizierung der Situation der aktuellen Lage verwendet wird, und
ein Erfassungsmodul, das verwendet wird zum Erfassen der an Bord befindlichen Kamera-Ausrüstung, die die Zahlungsdaten einzeln und auf einfache Art und Weise aufnehmen kann, aus der Mehrzahl der an Bord befindlichen Kamera-Ausrüstungen, anhand der zur Angabe der Umstände, unter denen die Mehrzahl an Bord befindlicher Kamera-Aurüstungen die Zahlungsdaten einzeln und auf einfache Art und Weise aufnehmen kann, verwendeten Daten.

7. Vorrichtung nach Anspruch 5, ferner umfassend:
ein Anzeigemodul, das zum Anzeigen einer Vielzahl verfügbarer Zahlungsmethoden zur Auswahl durch den Fahrzeugnutzer verwendet wird, bevor die Rechnungsdaten an den Hilfszahlungsserver gesendet werden,
wobei die Rechnungsdaten auch die vom Fahrzeugnutzer ausgewählte Zahlungsmethode enthalten.

8. Bordausrüstungsgegenstand, umfassend:
einen Prozessor; und
einen Speicher zur Speicherung ausführbarer Befehle, die die Ausführung eines der Verfahren nach einem der Ansprüche 1 - 3 durch den Prozessor ermöglichen.

9. Maschinenlesbarer Datenträger zur Speicherung ausführbarer Befehle, die die Ausführung eines der Verfahren nach einem der Ansprüche 1 - 3 durch den Prozessor ermöglichen.

10. Fahrzeug, umfassend:
eine Mehrzahl Bord-Kamera-Ausrüstungen und
den Bordausrüstungsgegenstand nach Anspruch 8.

## Claims

1. Method for transacting a payment on board a vehicle by means of an on-board computer, comprising the following steps:
continuously determining the current location of the vehicle and determining a situation of the current position and determining the situation in which the motor vehicle is located based on the current location and based on map data;
specifying the on-board camera equipment which can record payment data in the situation of the current location of a vehicle by a plurality of pieces of on-board camera equipment, when payment data are to be recorded, based on stored data used to indicate the situations in which the plurality of pieces of on-board camera equipment can record the payment data, and wherein the data are fixed and unchangeable;
switching on the specified camera equipment of the vehicle;
capturing payment data from images recorded by the switched-on camera equipment in order to transact the payment;
sending the captured payment data to a billing server in order to calculate the amount to be paid;
sending the invoice data to an auxiliary payment server in order to request payment when the amount to be paid and the recipient data are received from the billing server, wherein the invoice data contain at least the recipient data, the payer data and the amount to be paid;
displaying a variety of available payment methods for the vehicle user to select before the invoice data are sent to the auxiliary payment server,
wherein the invoice data also include the payment method selected by the vehicle user.

2. Method according to claim 1, wherein the step of specifying the on-board camera equipment which the payment data in the situation of the current position of the vehicle by a plurality of pieces of on-board camera equipment comprises the following steps:
determining the current location of the vehicle;
identifying the situation of the current position and
detecting, from the plurality of pieces of on-board camera equipment, the on-board camera equipment which can individually and easily record the payment data, based on the data used to indicate the circumstances in which the plurality of pieces of on-board camera equipment can individually and easily record the payment data.

3. Method according to claim 1, wherein:
the payment data are fixed on the barrier of a turnpike toll station or on the external surface of the refueling equipment of a gas station in order to be captured by the on-board camera equipment when switched on.

4. Device for transacting a payment on board a vehicle according to any of claims 1 to 3, comprising:
a specifying module used for specifying the on-board camera equipment, which the payment data in the situation of the current location of a vehicle by a plurality of pieces of on-board camera equipment, when payment data are to be recorded;
a switch-on module used to switch on the specified camera equipment of the vehicle, and
a capturing module used to capture payment data from images recorded by the switched-on camera equipment in order to transact the payment.

5. Device according to claim 4, further comprising:
a sending module used to send the captured payment data to a billing server to calculate the amount to be paid, and to send the invoice data to an auxiliary payment server to request the payment when the amount to be paid and the recipient data are received from the billing server, wherein the invoice data include at least the recipient data, the payer data and the amount to be paid.

6. Device according to claim 4, wherein the specifying module comprises:
a localization module used to localize the current location of the vehicle;
a recognition module used to identify the current situation of the current location, and
a detection module used to detect, from the plurality of pieces of on-board camera equipment, the on-board camera equipment which can individually and easily record the payment data, based on the data used to indicate the circumstances in which the plurality of pieces of on-board camera equipment can individually and easily record the payment data.

7. Device according to claim 5, further comprising:
a display module used to display a variety of available payment methods for selection by the vehicle user before the invoice data are sent to the auxiliary payment server,
wherein the invoice data also include the payment method selected by the vehicle user.

8. On-board equipment item comprising:
a processor; and
a memory for storing executable instructions which allow the processor to execute any of the methods according to any of claims 1 - 3.

9. Machine-readable data carrier for storing executable instructions which allow the processor to execute any of the methods according to any of claims 1 - 3.

10. Vehicle comprising:
a plurality of pieces of on-board camera equipment and
the on-board equipment item according to claim 8.

## Revendications

1. Procédé permettant de réaliser un paiement à bord d'un véhicule au moyen d'un ordinateur de bord, comprenant les étapes consistant à :
déterminer en continu l'emplacement actuel du véhicule et déterminer une situation de la position actuelle et déterminer la situation dans laquelle se trouve le véhicule automobile, à l'aide de l'emplacement actuel et à l'aide de données cartographiques ;
définir l'équipement de caméra embarqué qui peut enregistrer des données de paiement dans la situation de la position actuelle d'un véhicule à partir d'une pluralité d'équipements de caméra embarqués lorsque des données de paiement doivent être enregistrées, à l'aide de données stockées qui sont utilisées pour indiquer les situations dans lesquelles la pluralité d'équipements de caméra embarqués peuvent enregistrer les données de paiement, et dans lequel les données sont établies et inaltérables ;
mettre sous tension l'équipement de caméra défini du véhicule ;
capturer les données de paiement à partir d'images qui ont été prises par l'équipement de caméra mis sous tension afin de réaliser le paiement ;
envoyer les données de paiement capturées à un serveur de facturation afin de calculer le montant à régler ;
envoyer les données de facturation à un serveur de paiement auxiliaire pour demander le paiement lorsque le montant à régler et les données du bénéficiaire sont reçus par le serveur de facturation, dans lequel les données de facturation contiennent au moins les données de bénéficiaire, les données de payeur et le montant à régler ;
afficher une pluralité de méthodes de paiement disponibles à choisir par l'utilisateur de véhicule avant d'envoyer les données de facturation au serveur de paiement auxiliaire,
dans lequel les données de facturation contiennent également la méthode de paiement sélectionnée par l'utilisateur de véhicule.

2. Procédé selon la revendication 1, dans lequel l'étape de définition de l'équipement de caméra embarqué qui reçoit les données de paiement dans la situation de la position actuelle du véhicule à partir d'une pluralité d'équipements de caméra embarqués comprend les étapes suivantes :
déterminer l'emplacement actuel du véhicule ;
identifier la situation de la position actuelle et
capturer, parmi la pluralité d'équipements de caméra embarqués, l'équipement de caméra embarqué capable d'enregistrer individuellement et facilement les données de paiement, à l'aide des données utilisées pour indiquer les circonstances dans lesquelles la pluralité d'équipements de caméra embarqués peut enregistrer individuellement et facilement les données de paiement.

3. Procédé selon la revendication 1, dans lequel :
les données de paiement sont établies à la barrière d'un péage d'autoroute ou à la surface extérieure de l'équipement de ravitaillement d'une station-service, afin d'être capturées par l'équipement de caméra embarqué lors de la mise sous tension.

4. Dispositif permettant de réaliser un paiement à bord d'un véhicule selon l'une des revendications 1 à 3, comprenant :
un module de définition qui est utilisé pour définir l'équipement de caméra embarqué qui reçoit les données de paiement dans la situation de la position actuelle d'un véhicule parmi une pluralité d'équipements de caméra embarqués lorsque des données de paiement doivent être enregistrées ;
un module de mise sous tension qui est utilisé pour mettre sous tension l'équipement de caméra défini du véhicule, et
un module de capture qui est utilisé pour capturer les données de paiement à partir d'images qui ont été prises par l'équipement de caméra mis sous tension afin de réaliser le paiement.

5. Dispositif selon la revendication 4, comprenant en outre :
un module d'envoi qui est utilisé pour envoyer les données de paiement capturées à un serveur de facturation afin de calculer le montant à régler et pour envoyer les données de facturation à un serveur de paiement auxiliaire pour demander le paiement lorsque le montant à régler et les données de destinataire sont reçus par le serveur de facturation, dans lequel les données de facturation contiennent au moins les données de destinataire, les données de payeur et le montant à régler.

6. Dispositif selon la revendication 4, dans lequel le module de définition comprend :
un module de localisation qui est utilisé pour localiser l'emplacement actuel du véhicule ;
un module de reconnaissance qui est utilisé pour identifier la situation de la position actuelle, et
un module de capture qui est utilisé pour capturer, à partir de la pluralité d'équipements de caméra embarqués, l'équipement de caméra embarqué capable d'enregistrer individuellement et facilement les données de paiement, à l'aide des données utilisées pour indiquer les circonstances dans lesquelles la pluralité d'équipements de caméra embarqués peut enregistrer individuellement et facilement les données de paiement.

7. Dispositif selon la revendication 5, comprenant en outre :
un module d'affichage qui est utilisé pour afficher une pluralité de méthodes de paiement disponibles à sélectionner par l'utilisateur de véhicule avant d'envoyer les données de facturation au serveur de paiement auxiliaire,
dans lequel les données de facturation contiennent également la méthode de paiement sélectionnée par l'utilisateur de véhicule.

8. Pièce d'équipement de bord, comprenant :
un processeur ; et
une mémoire pour mémoriser des instructions exécutables permettant l'exécution par le processeur de l'un des procédés selon l'une des revendications 1 à 3.

9. Support de données lisible par machine pour la mémorisation d'instructions exécutables permettant l'exécution par le processeur de l'un des procédés selon l'une des revendications 1 à 3.

10. Véhicule, comprenant :
une pluralité d'équipements de caméra de bord et la pièce d'équipement de bord selon la revendication 8.
